# EUROPEAN PATENT APPLICATION

(11) **EP 4 365 068 A1**
(43) Date of publication of application: **08.05.2024**
(21) Application number: 22217310.6
(22) Date of filing: 30.12.2022
(51) Int. Cl.: B62K 3/04, B62K 19/06

(54) **REDUCING WIND RESISTANCE STRUCTURE OF BICYCLE**

(30) Priority: 07.11.2022 TW 111212172 U
(71) Applicant: Compositegear Taiwan Co., Ltd., New Taipei City 221011 (TW)
(72) Inventor: Chen, Jerry Han-Chieh, 221011 New Taipei City (TW)
(74) Representative: Cabinet Chaillot

(57) **Abstract**

A reducing wind resistance structure of a bicycle has an open-shaped air inlet (12) installed at the front tube end (11) of the top tube (10) of the bicycle frame (1) and an open-shaped air outlet (14) installed at the rear tube end (13), and the air inlet (12) and air outlet (14) are communicating through the channel (101) inside the top tube (10). The installation enables the partial airflow flowing through the frame (1) to be guided to flow out through the air inlets (12), the channel (101) inside the top tube (10) and the air outlets (14), thereby reducing wind resistance while riding.

## Description

### BACKGROUND OF THE INVENTION

### Field of the Invention

The present invention is generally directed to a reducing wind resistance structure of a bicycle, and more particularly, to a bicycle structure, reducing wind resistance via increasing the flow efficiency while air flow passing through the bicycle frame.

### Description of the Related Art

The air resistance is in direct proportion to the effective frontal area, the square of forward velocity and the drag coefficient. The factors causing air resistance when riding a bicycle include the rider, the bicycle accessories and the frame as well. In order to reduce the air resistance of the frame, the shape of tube material of frame is changed to water drop shape, round and even rhombus. The method to reduce air resistance includes the foregoing change of tube material shape and whether other methods can be utilized to reduce the air resistance of frame. The instant inventor has been providing to the instant structure capable of reducing air resistance as well after proceeding with research and development.

### SUMMARY OF THE INVENTION

Accordingly, it is a primary object of the present invention to provide a bicycle structure of reducing wind resistance via increasing the flow efficiency while air flow passing through the bicycle frame to reduce air resistance.

It is a primary feature of the present invention to install an open-shaped air inlet on the front tube end of the top tube of the frame and an open-shaped air outlet on the rear tube end, and the air inlet and the air outlet are communicating with each other through the channel inside the top tube. By means of the installation, the partial airflow flowing through the frame is capable of being guided to flow out through the air inlet, the channel inside the top tube and the air outlet, thereby increasing the flow efficiency of air flow while passing through the frame and further reducing air resistance.

The foregoing air inlet and air outlet are installed on the top tube and arranged bilateral symmetrically, and a front guiding flow base and a rear guiding flow base are respectively configured inside the tube of the front tube end and the rear tube end where corresponding to the air inlet and the air outlet, thereby enabling to guide the partial airflow flowing though the frame to flow through the air inlet and the channel of the inner tube of the top tube and the air outlet, and then flow out smoothly.

The technical means and structural components used to accomplish the above object and efficacy are described in detail below by referring to a preferred embodiment and the accompanying drawings.

### BRIEF DESCRIPTION OF THE DRAWINGS

Fig. 1 is a perspective view of the bicycle frame according to an embodiment of the invention.
Fig. 2 is a sectional perspective view of the top end of the top tube according to an embodiment of the invention.
Fig. 3 is a sectional top view of the top tube according to an embodiment of the invention.

### DETAILED DESCRIPTION OF THE PREFERRED EMBODIMENTS

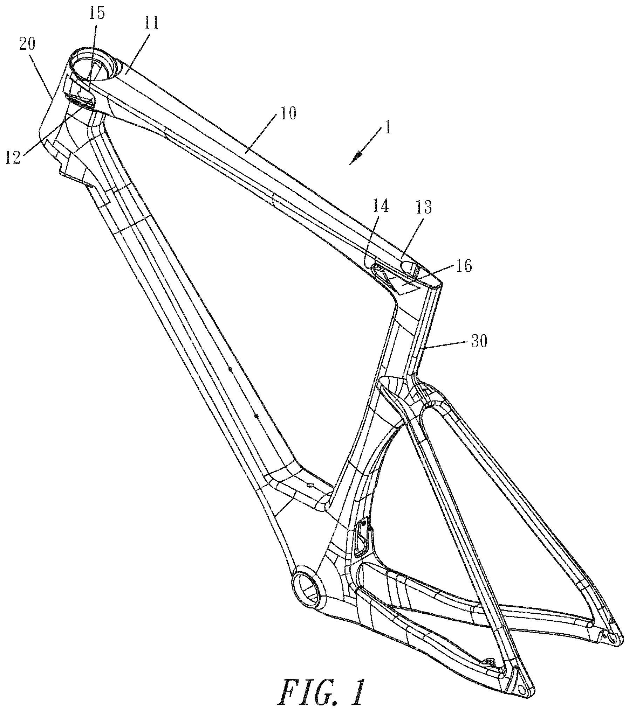

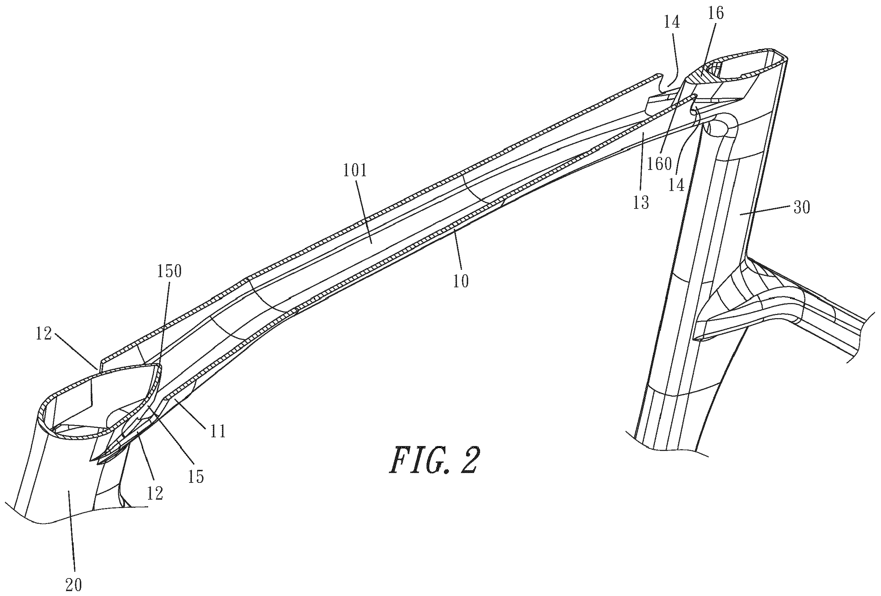

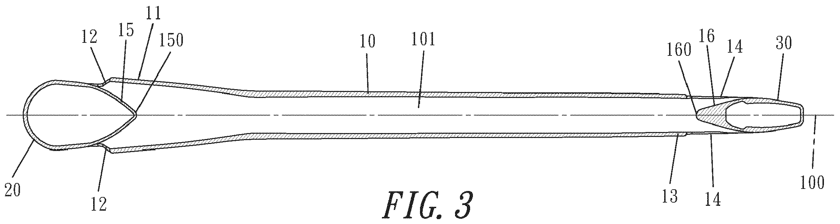

Referring to the drawings, Figs. 1-3 shows the top tube 10 of the bicycle frame, the air inlets 12 with opening toward the front of the bicycle are installed respectively on the right and left sides of the top tube 10 connecting with the front tube end 11 of the head tube 20, and the two air inlets 12 are arranged symmetrically and are communicated with the channel 101 inside the top tube 10 (Fig. 3). The air outlets 14 with opening toward the back of the bicycle are installed respectively on the left and right sides of the rear tube end 13 of the top tube 10 connecting with the seat tube 30 of the frame 1, and the two air outlets 14 are symmetrically arranged and communicated with the channel 101 inside the top tube 10 (Fig. 3).

Referring to Fig. 3, a front guiding flow base 15 is configured inside the tube of the front tube end 11 and between the two air inlets 12, wherein the front guiding flow base 15 being a conical shape and having a pointed cone 150 facing toward the rear tube end 13 and staying with the central axial line 100 of the top tube 10 at a same line (Fig. 3). A rear guiding flow base 16 is installed inside the tube of the rear tube end 13 and between the two air outlets 14, wherein the rear guiding flow base 16 being a conical shape and having a pointed cone 160 facing toward the front tube end 11 and staying with the central axial line 100 of the top tube 10 at a same line (Fig. 3).

The installation of the air inlets 12 on the front tube end 11 of the top tube 10, the air outlets 14 on the rear tube end 13 and the front guiding flow base 15 and the rear guiding flow base 16 enable the partial airflow flowing through the frame 1 to be guided through the air inlets 12, the inner channel 101 of the top tube 10 and the air outlets 14 to flow out, thereby increasing the flow efficiency of the airflow passing through the frame 1 and further reducing the air resistance while riding.

To summarize, the present invention is novel and has practical value and inventive step. Therefore, an application for utility model invention is hereby submitted. Your kind examination and approval will be highly appreciated.

## Claims

1. A reducing wind resistance structure of a bicycle, comprising:
an air inlet (12) with an opening facing toward the front of the bicycle installed at a top tube (10) of the bicycle frame connecting with a front tube end (11) of a head tube (20) of the frame (1), the air inlet (12) communicating with a channel (101) inside the top tube (10); and
an air outlet (14) with an opening facing toward the rear of the bicycle installed at a rear tube end (13) of the top tube (10) connecting with a seat tube (30) of the frame (1), the air outlet (14) communicating with the channel (101) inside the top tube (10).

2. The reducing wind resistance structure of the bicycle of claim 1, wherein
the left and right sides of the front tube end (11) are respectively configured with the air inlets (12) arranging symmetrically and the left and right sides of the rear tube end (13) are respectively configured with the air outlets (14) arranging symmetrically.

3. The reducing wind resistance structure of the bicycle of claim 2, wherein
a front guiding flow base (15) is installed inside the tube of the front tube end (11) and between the two air inlets (12), the front guiding flow base (15) is a conical shape having a pointed cone (150) facing toward the rear tube end (13) and staying on a same line with a central axial line (100 of the top tube (10), and a rear guiding flow base (16) is configured inside the tube of the rear tube end (13) and between the two air outlets (14), the rear guiding flow base (16) is a conical shape having a pointed cone (160) facing toward the front tube end (11) and staying on a same line with the central axial line (100) of the top tube (10).
